# EUROPÄISCHE PATENTSCHRIFT

(11) **EP 2 009 757 B1**
(45) Veröffentlichungstag und Bekanntmachung des Hinweises auf die Patenterteilung: **27.09.2017**
(21) Anmeldenummer: 08009879.1
(22) Anmeldetag: 30.05.2008
(51) Int. Cl.: H02G 3/10, H02G 3/14

(54) **Installationsgerät mit einem auf einer Montageplatte befestigten Gerätesockel**
Installation device with a device socket fixed to a mounting plate
Appareil d'installation doté d'un socle d'appareil fixé sur une plaque de montage

(30) Priorität: 25.06.2007 DE 102007029246
(43) Veröffentlichungstag der Anmeldung: 31.12.2008
(73) Patentinhaber: ABB AG, 68309 Mannheim (DE)
(72) Erfinder: Kohaupt, Stephan, Dipl.-Ing., 58093 Hagen (DE); Bankstahl, Johannes, Dipl.-Ing, 58739 Wickede/Ruhr (DE); Schulte-Lippern, Günter, Dipl.-Ing., 58513 Lüdenscheid (DE)

(56) Entgegenhaltungen:
- EP-A1- 1 376 801
- DE-A1- 19 704 022
- DE-A1-102005 052 794
- DE-U1- 29 610 554
- US-A- 5 594 208

## Beschreibung

Die Erfindung bezieht sich auf ein Installationsgerät mit einem auf einer Montageplatte befestigten Gerätesockel gemäß dem Oberbegriff des Anspruchs 1. Es handelt sich dabei beispielsweise um einen Steckdosen-Gerätesockel oder Schalter-Gerätesockel oder Taster-Gerätesockel oder Zubehör-Gerätesockel. Die Erfindung kann bei Installationsgeräten zur Aufputz-Montage verwendet werden.

Aus der DE 296 10 554 U1 ist ein elektrisches Installationsgerät zur Aufputz-Montage mit einer Grundplatte und mit einem an die Grundplatte fügbaren Träger für elektrische Kontaktteile bekannt, bei welchem der Träger über eine form- und/oder kraftformschlüssige Schnappverbindung befestigbar ist.

Der Erfindung liegt die Aufgabe zugrunde, ein Installationsgerät mit einem auf einer Montageplatte befestigten Gerätesockel anzugeben, bei welchem unterschiedliche Gerätesockel, wie Steckdosen-Gerätesockel oder Schalter-Gerätesockel, auf ein- und derselben Montageplatte befestigt werden können.

Diese Aufgabe wird in Verbindung mit den Merkmalen-des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass unter Verwendung ein- und derselben Montageplatte sowie unterschiedlicher Gerätesockel betreffend Steckdosen, Schalter, Taster, Zubehör und unterschiedlichter Adapter für diese Gerätesockel unterschiedliche Installationsgeräte, d. h. Aufputz-Steckdosen, Aufputz-Schalter, Aufputz-Taster, Aufputz-Zubehör kostengünstig hergestellt werden können. Des Weiteren wird mit Hilfe der Adapter neben der Erzeugung einer einheitlichen Rastgeometrie auch ein Toleranzausgleich erzielt und es wird eine übermäßige Beanspruchung (Biegebeanspruchung) des Gerätesockels unterbunden, z. B. bei zu festem Anziehen einer Zentralmutter zur Befestigung einer abdeckenden Kappe (beispielsweise Kappe mit Steckdosentopf).

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: eine perspektivische Ansicht der Konfiguration Montageplatte / Steckdosen-Gerätesockel / Steckdosen-Adapter vor der Montage,
- Fig. 2: eine perspektivische Ansicht der Konfiguration Montageplatte / Steckdosen-Gerätesockel / Steckdosen-Adapter nach erfolgter Montage,
- Fig. 3: eine perspektivische Ansicht der Oberseite eines Steckdosen-Adapters,
- Fig. 4: eine perspektivische Ansicht der Unterseite eines Steckdosen-Adapters,
- Fig. 5: eine perspektivische Ansicht der Oberseite eines Schalter-Adapters,
- Fig. 6: eine perspektivische Ansicht der Unterseite eines Schalter-Adapters,
- Fig. 7: eine perspektivische Ansicht der Konfiguration Montageplatte / Steckdosen-Gerätesockel / Steckdosen-Adapter / Kappe vor der Montage,
- Fig. 8: eine perspektivische Ansicht der Konfiguration Montageplatte / Schalter-Gerätesockel / Schalter-Adapter nach erfolgter Montage,
- Fig. 9: eine perspektivische Ansicht der Oberseite eines alternativen Schalter-Adapters,
- Fig. 10: eine perspektivische Ansicht der Unterseite eines alternativen Schalter-Adapters.

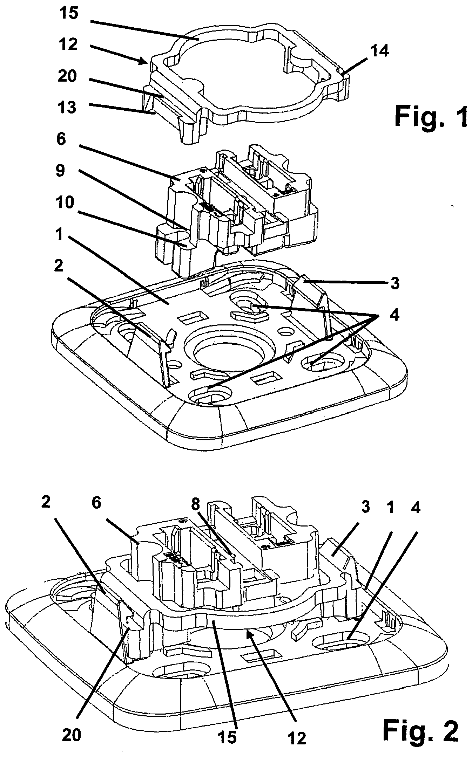

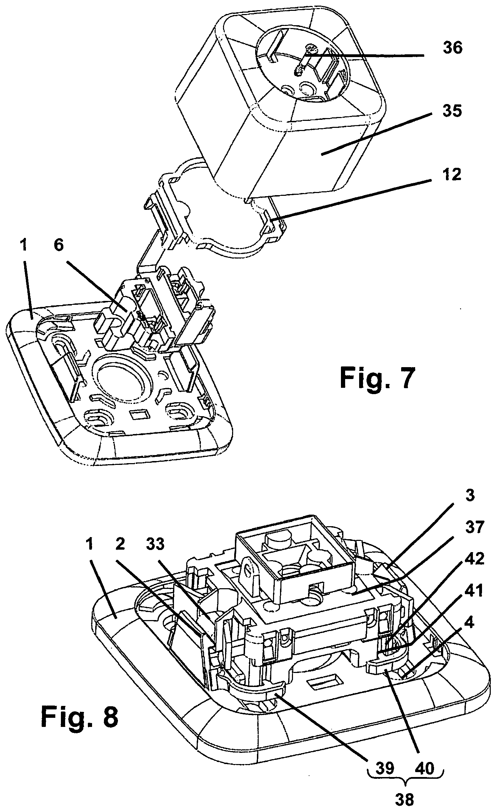

In Fig. 1 ist eine perspektivische Ansicht der Konfiguration Montageplatte / Steckdosen-Gerätesockel / Steckdosen-Adapter vor der Montage dargestellt. Im vorliegenden Fall handelt es sich um einen Steckdosen-Gerätesockel, die Erfindung ist jedoch in gleicher Weise auch bei Schalter-Gerätesockeln (siehe hierzu auch Fig. 8) bzw. Taster-Gerätesockeln und bei Zubehörsockeln (beispielsweise zur Realisierung eines Raumtemperaturreglers oder einer Lautsprecheranschlusseinheit oder einer Antennensteckdose oder einer Telekommunikationsanschlusseinheit oder eines Informationslichts / Warnmelders usw.) anwendbar. Folgende Komponenten sind gezeigt:
- eine Montageplatte 1, welche mehrere Montagebohrungen 4 zur Befestigung an einer Wand sowie zwei Rasthaken 2, 3 für die Verrastung eines Adapters aufweist,
- ein Steckdosen-Gerätesockel 6 (inklusive Anschlussklemmenblock für die Verdrahtung sowie elektrischen Kontaktteilen, wie Pol- und Erdkontakten für die Kontaktierung mit einem Stecker) mit Zentralmutter 8 (siehe Fig. 2) und Anschlagflächen 9, 10 für einen Steckdosen-Adapter 12,
- ein Steckdosen-Adapter 12 mit einem ringförmigen Bügel 15, welcher zwei sich gegenüberliegende Verrastungselemente 13, 14 besitzt, die jeweils Rastkanten 20 aufweisen und zur Verrastung mit der Montageplatte 1 dienen.

In Fig. 2 ist eine perspektivische Ansicht der Konfiguration Montageplatte / Steckdosen-Gerätesockel / Steckdosen-Adapter nach erfolgter Montage dargestellt. Die Rasthaken 2, 3 der Montageplatte 1 greifen über die Rastkanten 20 des Steckdosen-Adapters 12. Der Bügel 15 des Steckdosen-Adapters 12 greift über die (in Fig. 2 verdeckten) Anschlagflächen 9, 10 des Steckdosen-Gerätesockels 6.

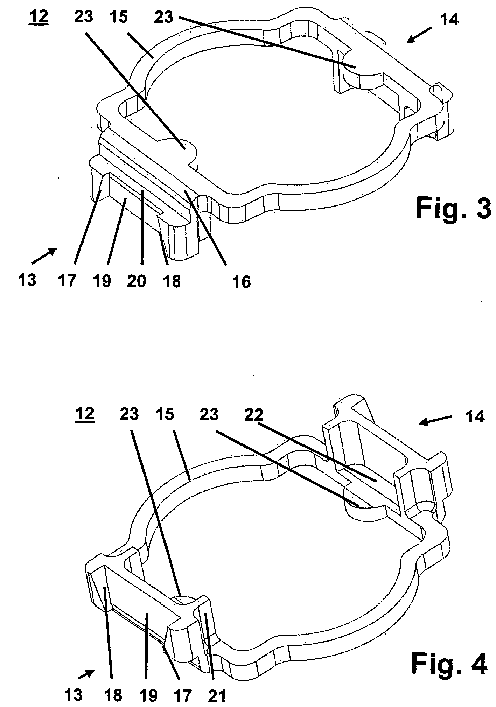

In Fig. 3 ist eine perspektivische Ansicht der Oberseite eines Steckdosen-Adapters dargestellt. Am Bügel 15 des Steckdosen-Adapters 12 sind die beiden Verrastungselemente 13, 14 sich einander gegenüberliegend angeordnet. Jedes Verrastungselement 13,14
- ist über einen Steg 16 am Bügel 15 angebunden,
- weist zwei randseitige Führungsstege 17, 18 auf, welche eine Führungsfläche 19 beidseitig begrenzen,
- besitzt an seiner dem Steg 16 benachbarten Oberseite eine Rastkante 20.

Die randseitigen Führungsstege 17, 18 liegen V-förmig zueinander, so dass die Führungsfläche 19 an der Unterseite breiter als an der Oberseite (nahe der Rastkante 20) und somit trapezförmig ausgebildet ist. Am Bügel 15 sind zwei sich einander gegenüberliegende elastische Ausgleichselemente 23 (nachgiebige Adapterflächen) angeordnet, welche im montierten Zustand - siehe Fig. 2 - federnd gegen die Anschlagflächen 9 des Steckdosen-Gerätesockels 6 drücken.

In Fig. 4 ist eine perspektivische Ansicht der Unterseite eines Steckdosen-Adapters 12 dargestellt. Insbesondere sind in unmittelbarer Nähe der Verrastungselemente 13, 14 angeordnet:
- unnachgiebige Adapterflächen 22,
- elastische Ausgleichselemente 23 (nachgiebige Adapterflächen),
- Rippen 21, welche zur seitlichen Führung des Adapters am Sockel dienen.

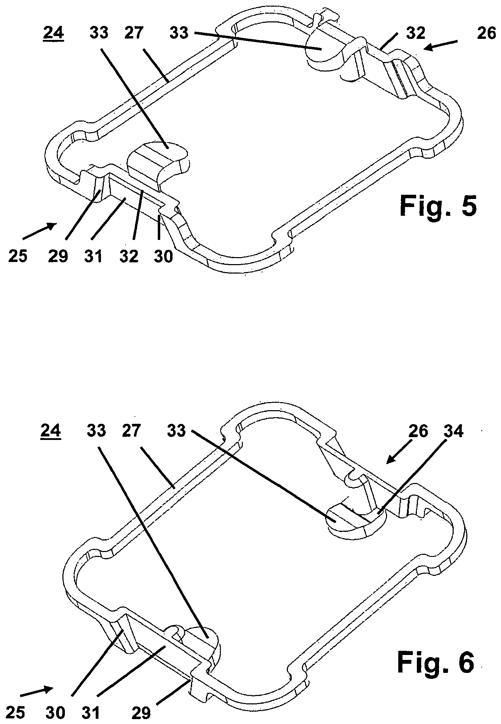

In Fig. 5 ist eine perspektivische Ansicht der Oberseite eines Schalter-Adapters dargestellt. Am umlaufenden Bügel 27 des Schalter-Adapters 24 sind die beiden Verrastungselemente 25, 26 sich einander gegenüberliegend angeordnet. Jedes Verrastungselement 25, 26
- weist zwei randseitige Führungsstege 29, 30 auf, welche eine Führungsfläche 31 randseitig begrenzen,
- besitzt an seiner Oberseite eine Rastkante 32.

Die randseitigen Führungsstege 29, 30 liegen V-förmig zueinander, so dass die Führungsfläche 31 an der Unterseite breiter als an der Oberseite (nahe der Rastkante 32) und somit trapezförmig ausgebildet ist. Am Bügel 27 sind zwei sich einander gegenüberliegende elastische Ausgleichselemente 33 (nachgiebige Adapterflächen) angeordnet, welche im montierten Zustand federnd gegen korrespondierende Anschlagflächen des Schalter-Gerätesockels (siehe hierzu auch den Schalter-Gerätesockel 37 in Fig. 8) drücken.

In Fig. 6 ist eine perspektivische Ansicht der Unterseite eines Schalter-Adapters 24 dargestellt. Insbesondere sind in unmittelbarer Nähe der Verrastungselemente 25, 26 angeordnet:
- unnachgiebige Adapterflächen 34,
- elastische Ausgleichselemente 33 (nachgiebige Adapterflächen).

Mittels der Konfigurationen
- "elastische Ausgleichselemente bzw. nachgiebige Adapterflächen 23 (beim Steckdosen-Adapter) respektive 33 (beim Schalter-Adapter) - Anschlagflächen 9" sowie
- "unnachgiebige Adapterflächen 22 (beim Steckdosen-Adapter) respektive 34 (beim Schalter-Adapter) - Anschlagflächen 10"
erhält man einen Adapter (Steckdosen-Adapter oder Schalter-Adapter) mit Toleranzausgleich mit folgenden Eigenschaften:
- Der Toleranzausgleich dient zur Biegeentlastung des Gerätesockels (Steckdosen-Gerätesockel oder Schalter-Gerätesockel) beim Anziehen der Kappen (beispielsweise Kappe mit Steckdosentopf).
- Die Ausgleichselemente 23, 33 (nachgiebige Adapterflächen) verhalten sich elastisch, wenn der Gerätesockel (Steckdosen-Gerätesockel oder Schalter-Gerätesockel) nach oben gegen die Rasthaken 2, 3 gezogen wird.
- Erreichen die elastischen Ausgleichselemente 23, 33 (nachgiebige Adapterflächen) eine definierte Auslenkung/ Biegung, so stößt der Gerätesockel (Steckdosen-Gerätesockel 6 oder Schalter-Gerätesockel 37) gegen die angrenzenden unnachgiebigen Adapterflächen 22, 34, welche dann als definierter Anschlag dienen.
- Durch die elastischen Ausgleichselemente bzw. nachgiebige Adapterflächen 23, 33 des Adapters (Steckdosen-Adapter 12 oder Schalter-Adapter 24) wird gewährleistet, dass der Gerätesockel nicht übermäßig auf Biegung beansprucht wird und gegebenenfalls bricht.
- Durch die elastischen Ausgleichselemente bzw. nachgiebige Adapterflächen 23, 33 des Adapters (Steckdosen-Adapter 12 oder Schalter-Adapter 24) wird ein übermäßiges Verbiegen des Gerätesockels (Steckdosen-Gerätesockel oder Schalter-Gerätesockel) verhindert. Hierdurch wird das Risiko unterbunden, dass die elektrischen Kontaktteile aus ihrer vorgegebenen Lage verdrängt werden.

Die Adapter (Steckdosen-Adapter und Schalter-Adapter sowie weitere Adapter) dienen selbstverständlich hauptsächlich dem Ziel, eine einheitliche Rastgeometrie zu erzeugen, d. h. die unterschiedlichen Geräte-/Bauteilgeometrien von unterschiedlichen Gerätesockeln (Steckdosen-Gerätesockel oder Schalter-Gerätesockel sowie weitere Gerätesockel) auf einer einheitlichen Verrastung, der Montageplatte, zu befestigen.

Für die Befestigung wird in einem ersten Schritt zunächst der Adapter (z. B. Steckdosen-Adapter 12 oder Schalter-Adapter 24) über den Gerätesockel (z. B. Steckdosen-Gerätesockel 6 oder Schalter-Gerätesockel 37) gestülpt.

In einem zweiten Schritt wird die Einheit Gerätesockel + Adapter auf die Montageplatte 1 aufgesetzt, so dass die Rasthaken 2, 3 auf die Führungsflächen 19 oder 31 der beiden Verrastungselemente 13, 14 oder 25, 26 aufsitzen. Die Breite der Führungsflächen 19, 31 an ihrer Unterseite ist größer als die Breite der Rasthaken 2, 3, wodurch ein präzises (zentriertes) Aufsetzen der Einheit Gerätesockel + Adapter auf die Montageplatte 1 nicht erforderlich ist und das Aufsetzen erleichtert wird.

In einem dritten Schritt wird der Adapter (Steckdosen-Adapter 12 oder Schalter-Adapter 24) gegen die Montageplatte 1 gedrückt. Die Rasthaken 2, 3 gleiten dabei entlang der Führungsflächen 19 oder 31. Durch die sich nach oben verjüngende Form der Führungsflächen 19, 31 wird ein eventueller seitlicher Versatz zwischen Gerätesockel und Montageplatte automatisch während des Einführens korrigiert, d. h. es erfolgt eine automatische Zentrierung der Anordnung des Gerätesockels (Steckdosen-Gerätesockel 6 oder Schalter-Gerätesockel 37) auf der Montageplatte 1.

In einem vierten Schritt erfolgt eine Verrastung zwischen Gerätesockel und Montageplatte 1, indem die Rasthaken 2, 3 über die Rastkanten 20 oder 32 greifen.

In Fig. 7 ist eine perspektivische Ansicht der Konfiguration Montageplatte / Steckdosen-Gerätesockel / Steckdosen-Adapter / Kappe vor der Montage dargestellt. Nachdem die Verrastung des Steckdosen-Gerätesockels 6 auf der Montageplatte 1 mittels des Steckdosen-Adapters 12 erfolgt ist, wird die Kappe 35 aufgesetzt und mittels Zentralschraube 36 am Steckdosen-Gerätesockel 6 befestigt.

In Fig. 8 ist eine perspektivische Ansicht der Konfiguration Montageplatte / Schalter-Gerätesockel / Schalter-Adapter nach erfolgter Montage dargestellt. Es ist zu erkennen, dass die Montageplatte 1 über ihre beiden Rasthaken 2, 3 mit einem alternativen Schalter-Adapter 38 - bestehend aus zwei getrennten und gleichartig ausgebildeten Bügeln 39, 40 - verrastet ist, welche jeweils mit einem Verrastungselement 25, 26 und einem elastischen Ausgleichselement 33 versehen sind und über die elastischen Ausgleichelemente 33 (nachgiebige Adapterflächen) eine Befestigung des Schalter-Gerätesockels 37 bewirken. Die Bügel 39, 40 weisen jeweils Führungsnasen 41 auf, welche in Führungsnuten 42 des Schalter-Gerätesockels 37 eingreifen.

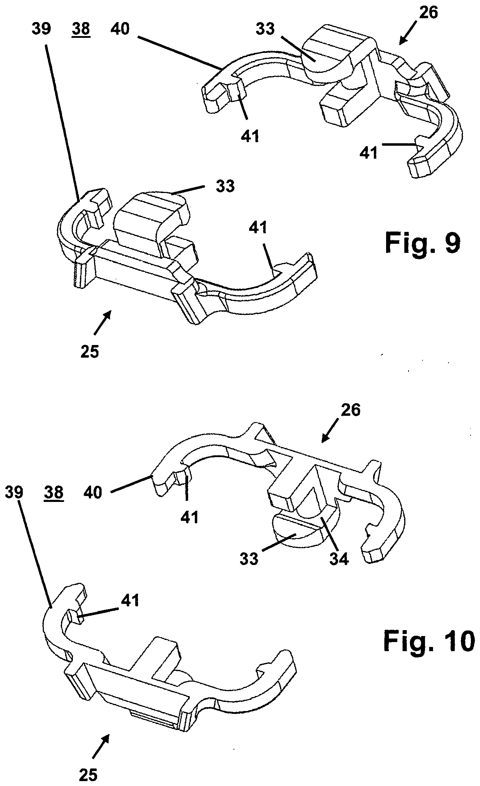

In den Fig. 9 bzw. 10 sind perspektivische Ansichten der Oberseite bzw. der Unterseite eines alternativen Schalter-Adapters 38 dargestellt, welcher aus den beiden symmetrischen Bügeln 39, 40 gebildet ist, wobei jeder Bügel 39 bzw. 40
- ein Verrastungselement 25 bzw. 26 aufweist, welches mit dem entsprechenden Rasthaken der Montageplatte verrastet,
- ein elastisches Ausgleichselement 33 besitzt, welches gegen die entsprechende Anschlagfläche (z. B. Anschlagfläche 9) des Gerätesockels drückt,
- eine unnachgiebige Adapterfläche 34 aufweist, welche im montierten Zustand einer entsprechenden Anschlagfläche (z. B. Anschlagfläche 10) des Gerätesockels gegenüberliegt bzw. an dieser Anschlagfläche anliegt,
- zwei randseitig nach innen gerichtete Führungsnasen 41 besitzt, welche in die korrespondierenden Führungsnuten 42 des Gerätesockels (z. B. des Schalter-Gerätesockels 37) eingreifen.

Die Führungsnasen 41 erleichtern das korrekte (verdrehungsfreie) Aufsetzen des Adapters auf den Gerätesockel und stellen eine "vorläufige" Fixierung der Baueinheiten Gerätesockel + Adapter sicher. Selbstverständlich sind die weiteren vorstehenden Erläuterungen auch für den alternativen Schalter-Adapter 38 gültig.

### Bezugszeichenliste:

- 1: Montageplatte
- 2: Rasthaken
- 3: Rasthaken
- 4: Montagebohrungen
- 5: ---
- 6: Steckdosen-Gerätesockel
- 7: ---
- 8: Zentralmutter
- 9: Anschlagfläche für die elastische Ausgleichselemente
- 10: Anschlagfläche für die unnachgiebige Adapterfläche
- 11: ---
- 12: Steckdosen-Adapter
- 13: Verrastungselement
- 14: Verrastungselement
- 15: Bügel
- 16: Steg
- 17: Führungssteg
- 18: Führungssteg
- 19: Führungsfläche
- 20: Rastkante
- 21: Rippe
- 22: unnachgiebige Adapterfläche
- 23: elastisches Ausgleichselement (nachgiebige Adapterfläche)
- 24: Schalter-Adapter
- 25: Verrastungselement
- 26: Verrastungselement
- 27: Bügel
- 28: ---
- 29: Führungssteg
- 30: Führungssteg
- 31: Führungsfläche
- 32: Rastkante
- 33: elastisches Ausgleichselement (nachgiebige Adapterfläche)
- 34: unnachgiebige Adapterfläche
- 35: Kappe
- 36: Zentralschraube
- 37: Schalter-Gerätesockel
- 38: alternativer Schalter-Adapter
- 39: Bügel
- 40: Bügel
- 41: Führungsnase
- 42: Führungsnut des Schalter-Gerätesockels

## Patentansprüche

1. Installationsgerät mit einem auf einer Montageplatte (1) befestigten Gerätesockel (6, 37) zur Aufnahme von elektrischen Kontaktteilen, **dadurch gekennzeichnet, dass** mindestens ein Adapter (12, 24, 38) einerseits über mindestens ein Verrastungselement (13, 14, 25, 26) an der Montageplatte (1) lösbar verbunden ist und andererseits über mindestens ein elastisches Ausgleichselement (23, 33) gegen eine Anschlagfläche (9) des Gerätesockels (6, 37) presst und letzteren somit an der Montageplatte (1) befestigt.

2. Installationsgerät nach Anspruch 1, **gekennzeichnet durch** mindestens eine unnachgiebige Adapterfläche (22, 34), welche gegen eine Anschlagfläche (10) des Gerätesockels (6, 37) presst.

3. Installationsgerät nach Anspruch 1 oder 2, **dadurch gekennzeichnet, dass** das Verrastungselement (13, 14, 25, 26) zwei randseitige Führungsstege (17, 18, 29, 30) aufweist, welche eine Führungsfläche (19, 31) für die Führung eines mit der Montageplatte (1) verbundenen Rasthakens (2, 3) beidseitig begrenzen, wobei die Führungsfläche (19, 31) an ihrer Oberseite mit einer Rastkante (20, 32) für den Rasthaken (2, 3) endet.

4. Installationsgerät nach Anspruch 3, **dadurch gekennzeichnet, dass** die Führungsfläche (19, 31) trapezförmig ausgebildet ist, derart dass die für die Einführung des Rasthakens (2, 3) bestimmte Unterseite der Führungsfläche (19, 31) breiter als ihre Oberseite nahe der Rastkante (20, 32) ist.

5. Installationsgerät nach einem der vorstehenden Ansprüche, **dadurch gekennzeichnet, dass** der Adapter (12, 24) einen umlaufenden Bügel (15, 27) aufweist, welcher mit zwei sich gegenüberliegenden Verrastungselementen (13, 14, 25, 26) und zwei sich gegenüberliegenden elastischen Ausgleichselementen (23, 33) versehen ist.

6. Installationsgerät nach einem der Ansprüche 1 - 4, **dadurch gekennzeichnet, dass** der Adapter (38) aus zwei separaten Bügeln (39, 40) besteht, welche jeweils mit einem Verrastungselement (25, 26) und einem elastischen Ausgleichselement (33) versehen sind.

## Claims

1. Installation device comprising a device base (6, 37), which is fastened on a mounting board (1), for receiving electrical contact parts, **characterized in that** at least one adapter (12, 24, 38) is firstly detachably connected to the mounting board (1) by means of at least one latching element (13, 14, 25, 26) and secondly presses against a stop face (9) of the device base (6, 37) by means of at least one elastic compensation element (23, 33) and therefore fastens the said device base to the mounting board (1).

2. Installation device according to Claim 1, **characterized by** at least one rigid adapter face (22, 34) which presses against a stop face (10) of the device base (6, 37).

3. Installation device according to Claim 1 or 2, **characterized in that** the latching element (13, 14, 25, 26) has two edge-side guide webs (17, 18, 29, 30) which bound a guide face (19, 31) for guiding a latching hook (2, 3), which is connected to the mounting board (1), on both sides, wherein the guide face (19, 31) ends at its top side with a latching edge (20, 32) for the latching hook (2, 3).

4. Installation device according to Claim 3, **characterized in that** the guide face (19, 31) is of trapezoidal design, in such a way that the bottom side of the guide face (19, 31), which bottom side is intended for inserting the latching hook (2, 3), is wider than its top side close to the latching edge (20, 32).

5. Installation device according to one of the preceding claims, **characterized in that** the adapter (12, 24) has a circumferential bracket (15, 27) which is provided with two opposite latching elements (13, 14, 25, 26) and two opposite elastic compensation elements (23, 33).

6. Installation device according to one of Claims 1-4, **characterized in that** the adapter (38) consists of two separate brackets (39, 40) which are each provided with a latching element (25, 26) and an elastic compensation element (33).

## Revendications

1. Appareil d'installation comportant un socle d'appareil (6, 37) fixé à une plaque de montage (1), pour recevoir des pièces de contact électriques, **caractérisé en ce qu'**au moins un adaptateur (12, 24, 38) est d'une part relié de manière amovible par l'intermédiaire d'au moins un élément d'encliquetage (13, 14, 25, 26) à la plaque de montage (1) et est d'autre part comprimé, par l'intermédiaire d'au moins un élément de compensation élastique (23, 33), contre une surface de butée (9) du socle d'appareil (6, 37), et **en ce qu'**il est enfin ainsi fixé à la plaque de montage (1).

2. Appareil d'installation selon la revendication 1, **caractérisé par** au moins une surface d'adaptation non flexible (22, 23) qui est comprimée contre une surface de butée (10) du socle d'appareil (6, 37).

3. Appareil d'installation selon la revendication 1 ou 2, **caractérisé en ce que** l'élément d'encliquetage (13, 14, 25, 26) comporte deux barrettes de guidage de bordure (17, 18, 29, 30), qui délimitent des deux côtés une surface de guidage (19, 31) destinée au guidage d'un crochet d'encliquetage (2, 3) relié à la plaque de montage (1), dans lequel la surface de guidage (19, 31) se termine, au niveau de sa face supérieure, par une arête d'encliquetage (20, 32) destinée aux crochets d'encliquetage (2, 3).

4. Appareil d'installation selon la revendication 3, **caractérisé en ce que** la surface de guidage (19, 31) est réalisée de manière à présenter une forme trapézoïdale afin que la face inférieure de la surface de guidage (19, 31) servant au guidage du crochet d'encliquetage (2, 3) soit plus large que sa face supérieure à proximité de l'arête d'encliquetage (20, 32).

5. Appareil d'installation selon l'une quelconque des revendications précédentes, **caractérisé en ce que** l'adaptateur (12, 24) comporte un étrier (15, 27) circonférentiel qui est pourvu de deux éléments d'encliquetage (13, 14, 25, 26) mutuellement opposés et de deux éléments de compensation élastiques (23, 33) mutuellement opposés.

6. Appareil d'installation selon les revendications 1 à 4, **caractérisé en ce que** l'adaptateur (38) est constitué de deux étriers (39, 40) séparés qui sont pourvus d'un élément d'encliquetage (25, 26) et d'un élément de compensation élastique (33).
